# EUROPÄISCHE PATENTSCHRIFT

(11) **EP 2 340 925 B1**
(45) Veröffentlichungstag und Bekanntmachung des Hinweises auf die Patenterteilung: **03.04.2013**
(21) Anmeldenummer: 11150079.9
(22) Anmeldetag: 04.01.2011
(51) Int. Cl.: B29C 67/00, B22F 3/105, B29C 35/00

(54) **Verfahren zum generativen Herstellen eines dreidimensionalen Objekts mit kontinuierlicher Wärmezufuhr**
Process for generative production of a three-dimensional object with continuous heat supply
Procédé de fabrication générative d'un objet tridimensionnel doté d'une amenée de chaleur en continu

(30) Priorität: 05.01.2010 DE 102010004036
(43) Veröffentlichungstag der Anmeldung: 06.07.2011
(73) Patentinhaber: EOS GmbH Electro Optical Systems, 82152 Krailling (DE)
(72) Erfinder: Baumann, Andreas, 82166, Gräfelfing (DE)
(74) Vertreter: Prüfer & Partner GbR European Patent Attorneys

(56) Entgegenhaltungen:
- EP-A1- 1 270 185
- WO-A1-2006/105827
- DE-A1-102006 055 055
- US-B1- 6 930 278

## Beschreibung

Die vorliegende Erfindung bezieht sich auf ein Verfahren zum generativen Herstellen eines dreidimensionalen Objekts.

EP 0 764 079 B1 beschreibt eine bekannte Lasersintervorrichtung, mit einem Behälter, der mit seinem oberen Rand ein Baufeld umschließt; einem Träger, der in dem Behälter angeordnet ist und durch eine Hubmechanik zumindest unterhalb des Baufelds vertikal bewegbar ist; einer Bestrahlungsvorrichtung, die einen Energiestrahl erzeugt, der durch eine Ablenkeinrichtung auf beliebige Punkte in dem Baufeld fokussiert wird, um in dem Baufeld befindliches Pulvermaterial selektiv zu sintern oder zu schmelzen; einem Beschichter zum Aufbringen einer Schicht eines Pulvermaterials auf den Träger oder einer zuvor aufgebrachten Schicht des Pulvermaterials. Die Lasersintervorrichtung hat eine Heizeinrichtung, die zum Aufheizen einer mit einem Beschichter aufgetragenen Pulverschicht auf eine für die Sinterung mittels des Laserstrahls erforderliche Vortemperatur dient. Die Heizeinrichtung in EP 0 764 079 B1 hat einen Sensor in Gestalt eines Pyrometers, der an einer vorgegebenen Stelle über dem Pulverbett bzw. dem Baufeld angebracht ist. Die Temperatursignale des Pyrometers werden als Ist-Wert für eine PID- oder PI-Regelung verwendet.

Trotz der Verwendung der Heizeinrichtung kann es zu Temperaturinhomogenitäten innerhalb des Bauraums kommen, wodurch die mechanischen Eigenschaften der Objekte inhomogen sein können.

US 6,930,278 B1 offenbart, gemäß dem Oberbegriff des Anspruchs 1, ein Verfahren zum generativen Herstellen eines dreidimensionalen Objekts, mit einer Vorrichtung, die Folgendes aufweist : einen Rahmen, dessen oberer Abschnitt ein Baufeld umschließt; einen Träger, der in dem Rahmen angeordnet ist und durch eine Hubmechanik zumindest unterhalb des Baufelds vertikal bewegbar ist; eine Vorrichtung zum Erzeugen einer emergiechaltigen Strahlung, die selektiv auf beliebige Punhte in dem Baufeld trifft, um in dem Baufeld befindliches Pulvermaterial selektiv zu sintern oder zu schmelzen; einen Beschichter zum Aufbringen einer Schicht eines Pulvermaterials auf den Träger oder eine zuvor aufgebrachte Schicht des Pulvermaterials; ein Gehäuse, in dem zumindest der Rahmen und der Träger angeordnet sind und das einen Bauraum umschließt; und eine Heizvorrichtung, die zumindest der Baufeldumgebung oder dem Bauraum darüber kontinuierlich Warme zuführt; wobei die Heizvorrichtung zusätzlich zu einer weiteren Heizvorrichtung zur Beheizung des Baufelds vorgesehen ist.

Die Heizleistung aller Heizvorrichtungen wird mittels einer gemeinsamen Sollgröße geregelt.

Es ist die Aufgabe der vorliegenden Erfindung, ein Verfahren zum generativen Herstellen eines dreidimensionalen Objekts vorzusehen, durch das die mechanischen Eigenschaften des hergestellten Objekts verbessert werden können.

Diese Aufgabe wird durch das Verfahren zum generativen Herstellen eines dreidimensionalen Objekts mit den Merkmalen des Anspruchs 1 gelöst. Vorteilhafte Weiterbildungen sind Gegenstand der Unteransprüche.

Bei einer vorteilhaften Weiterbildung wird beispielsweise der kontinuierliche Wärmeverlust durch die kontinuierliche Wärmezufuhr kompensiert, so dass Wärmeverluste am Rand des Baufelds minimiert werden können und eine bessere Temperaturverteilung bis zum Randbereich ermöglicht wird. Dadurch vergrößert sich das prozesssichere effektive Baufeld, und es können eine homogene Wärmezufuhr und Temperaturverteilung über das gesamte Baufeld erreicht werden.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Ansicht einer Vorrichtung zum Herstellen eines dreidimensionalen Objekts gemäß einem ersten Ausführungsbeispiel; und
- Fig. 2: eine Konfiguration einer Heizvorrichtung bei der Vorrichtung gemäß der Fig.1;
- Fig. 3: eine schematische Ansicht einer Vorrichtung zum Herstellen eines dreidimensionalen Objekts gemäß einem zweiten Ausführungsbeispiel;
- Fig. 4: eine schematische Ansicht einer Vorrichtung zum Herstellen eines dreidimensionalen Objekts gemäß einem dritten Ausführungsbeispiel;
- Fig. 5: eine schematische Ansicht einer Vorrichtung zum Herstellen eines dreidimensionalen Objekts gemäß einem vierten Ausführungsbeispiel.

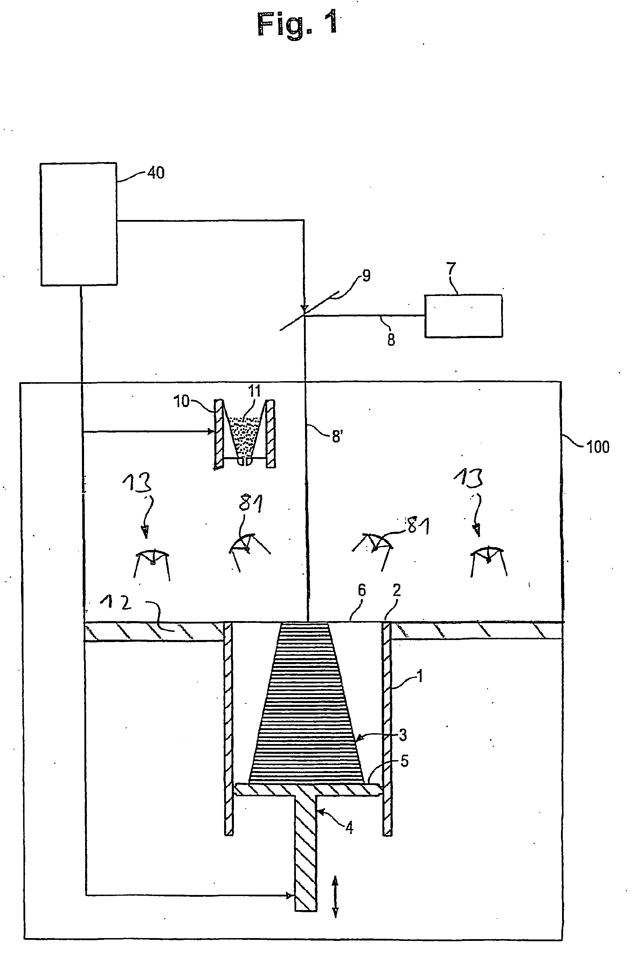

Die Fig. 1 zeigt eine schematische Ansicht einer Vorrichtung zum Herstellen eines dreidimensionalen Objekts 3 gemäß einem ersten Ausführungsbeispiel, die exemplarisch als Lasersintervorrichtung ausgebildet ist.

Die Lasersintervorrichtung weist einen nach oben hin offenen Rahmen 1 mit einem darin befindlichen, in vertikaler Richtung bewegbaren Träger 5 auf, der das herzustellende dreidimensionale Objekt 3 trägt. Der Rahmen 1 umschließt an seinem oberen Abschnitt 2 ein Baufeld 6. Vorzugsweise bilden der Rahmen 1 und der Träger 5 einen austauschbaren Wechselrahmen, der der Lasersintervorrichtung entnommen werden kann. Der Träger 5 ist mit einer Hubmechanik 4 in Verbindung, die ihn zumindest unterhalb der Ebene des Baufelds 6 in vertikaler Richtung so verfährt, dass die Oberseite einer jeweils zu verfestigenden Pulverschicht in der Ebene des Baufelds 6 liegt. Als Ebene des Baufelds wird hier die Ebene angesehen, in der der obere Rand des oberen Abschnitts 2 liegt.

Des Weiteren ist ein Beschichter 10 zum Aufbringen einer Schicht eines Pulvermaterials 11 vorgesehen. Als Pulvermaterial 11 können alle lasersinterbaren Pulver verwendet werden, zum Beispiel lasersinterbare Polymere wie Polyaryletherketone, Polyarylethersulfane, Polyamide, Polyester, Polyether, Polyolefine, Polystyrole, Polyphenylensulfide, Polyvinylidenfluoride, Polyphenylenoxide, Polyimide deren Copolymere und Blends, die mindestens eines der vorangehenden Polymere einschließen, wobei die Auswahl jedoch nicht auf die oben genannten Polymere und Copolymere beschränkt ist. Besonders geeignete Polyaryletherketone können aus der Gruppe Polyetheretherketon (PEEK), Polyetherketoneketon (PEKK), Polyetherketon (PEK), Polyetheretherketoneketon (PEEKK) und Polyetherketoneetherketoneketon (PEKEKK) und Polyetheretheretherketon (PEEEK) sowie deren Copolymere insbesondere mit Polyorylethersulfonen sowie deren Blends ausgewählt werden, welche mindestens eines der zuvorgenannten Polymere beinhalten. Besonders geeignete Polyamid-Polymere oder Copolymere und deren Blends können aus der Gruppe ausgewählt werden, die aus Polamid 6/6T, Polyamidelastomeren wie Polyetherblockamide wie z.B. PEBAX-basierte Materialien, Polyamid 6, Polyamid 66, Polyamid 11, Polyamid 12, Polyamid 612, Polyamid 610, Polyamid 1010, Polyamid 1212, Polyamid PA6T/66, PA4T/46 und Copolymeren besteht, die mindestens eines der vorgenannten Polymere einschließen. Geeignete Polyesterpolymere oder Copolymere können aus der aus Polyalkylenterephtholaten (z.B. PET, PBT) und deren Copolymeren ausgewählt werden. Geeignete Polyolefinpolymere oder Copolymere können aus der aus Polyethylen und Polypropylen bestehenden Gruppe ausgewählt werden. Geeignete Polystyrolpolymere oder Copolymere können aus der aus syndiotaktischen und isotaktischen Polystyrolen bestehenden Gruppe ausgewählt werden. Des Weiteren können Polymere-Kompositpulver verwendet werden, welche Füllstoffe und/oder Additive neben dem entsprechenden Polymer, Copolymer oder Blend enthalten. Zu solchen Füllstoffen zählen beispielsweise Fasern wie z.B. Kohle- oder Glasfasernfasern und Carbon-Nanotubes, Füllstoffe mit einem geringem Aspektverhältnis wie z.B. Glaskugeln oder Alugries, mineralische Füllstoffe wie z.B. Titandioxid. Zu den Additiven zählen u.a. Prozeßhilfsmittel wie z.B. Rieselhilfsmittel der Aerosil-Serie (z.B. Aerosil 200), funktionelle Additive wie Hitzestabilisatoren, Oxidationsstabilisatoren, Farbpigmente (z.B. Graphit und Ruß) und Flammschutzmittel (z.B. Organophosphate, polybromierte Kohlenwasserstoffe). Als Pulvermaterial 11 können auch Metalle, Keramiken, Formsand und Verbundmaterialien verwendet werden. Als metallhaltiges Pulvermaterial kommen beliebige Metalle und deren Legierungen sowie Mischungen mit metallischen Komponenten oder mit nichtmetallischen Komponenten in Frage.

Der Beschichter 10 wird in einer vorbestimmten Höhe über das Baufeld 6 verfahren, so dass die Schicht des Pulvermaterials 11 mit einer definierten Höhe über dem Träger 5 bzw. über der zuletzt verfestigten Schicht liegt. Die Vorrichtung weist des Weiteren eine Bestrahlungsvorrichtung in Gestalt eines Lasers 7 auf, der einen Laserstrahl 8, 8 ' erzeugt, der durch eine Ablenkeinrichtung 9 auf beliebige Punkte in dem Baufeld 6 fokussiert wird. Dadurch kann der Laserstrahl 8, 8 ' das Pulvermaterial 11 an den Stellen selektiv verfestigen, die dem Querschnitt des herzustellenden Objekts 3 entsprechen.

Mit dem Bezugszeichen 100 ist ein Gehäuse bezeichnet, in dem der Rahmen 1 , der Träger 5 und der Beschichter 10 angeordnet sind. Das Gehäuse 100 hat im oberen Bereich einen Einlass für den Laserstrahl 8, 8 '. Vorzugsweise ist das Gehäuse 100 gasdicht ausgebildet, so dass ein Schutzgas eingeführt werden kann. Das Innere des Gehäuses 100 wird nachfolgend als Bauraum bezeichnet. Es ist ferner eine Steuereinheit 40 vorgesehen, über die die Vorrichtung in koordinierter Weise zum Durchführen des Bauprozesses und zum Steuern des Energieeintrags durch den Laser 7 gesteuert wird.

In der Vorrichtung ist eine Platte 12 vorgesehen, die mit dem Rahmen 1 , zum Beispiel an dessen oberem Abschnitt 2, und/oder mit dem Gehäuse 100 der Vorrichtung in Kontakt ist. In vorteilhafter Weise wird der Abstand zwischen dem Rahmen 1 und dem Gehäuse 100 der Vorrichtung durch die Platte 12 so groß gewählt, dass möglichst weniger Wärme aus dem Rahmen 1 von der Platte 12 und dem Gehäuse 100 der Vorrichtung absorbiert werden kann.

Die Vorrichtung weist eine Heizvorrichtung 13 auf, die der Baufeldumgebung oder dem Bauraum darüber kontinuierlich Wärme zuführt. Der Begriff "Baufeldumgebung" bezeichnet hierbei einen in derselben Ebene wie das Baufeld 6 liegenden Bereich innerhalb des Gehäuses 100, der lateral an das Baufeld 6 angrenzt und sich zwischen Baufeld 6 und Gehäuse 100 erstreckt. Vorzugsweise ist in dieser Baufeldumgebung die Platte 12 angeordnet, sodass die Heizvorrichtung 13 dann die Platte 12 selbst und/oder den Bauraum über der Platte 12 beheizt. Die Heizvorrichtung 13 dient als aktive Isolierung des Baufelds 6, um Wärmeverluste von dem Baufeld 6 nach außen in die Baufeldumgebung und in den Bauraum über dieser zu kompensieren. Gemäß dem in der Fig. 1 gezeigten ersten Ausführungsbeispiel weist die Heizvorrichtung 13 mindestens einen Heizstrahler auf, der vorzugsweise über der Platte 12 angeordnet ist. Der Zweck dieser Anordnung besteht darin, dass der Baufeldumgebung oder dem Bauraum darüber kontinuierlich ein Grundbetrag einer Wärmemenge zugeführt wird. Es ist dabei nicht ausgeschlossen, dass die Heizvorrichtung 13 auch anderen Bereichen der Lasersintervorrichtung Wärme zuführt. Wesentlich bei der Erfindung ist jedoch, dass die Heizvorrichtung 13 zumindest der Baufeldumgebung oder dem Bauraum darüber kontinuierlich Wärme zuführt.

Die von der Heizvorrichtung 13 benötigte Wärmezufuhr wird unter Berücksichtigung der Bautemperatur ermittelt und ist vorzugsweise fest eingestellt für baugleiche Vorrichtungen zum generativen Herstellen eines dreidimensionalen Objekts 3. Beispielsweise sind feste Werte für die verwendeten Pulver vorgesehen, wie zum Beispiel für Bautemperaturen von 170°C, 180°C und 190°C. Die Heizleistung der Heizvorrichtung 13 kann während der Herstellung des dreidimensionalen Objekts 3 verändert werden, bleibt aber vorzugsweise konstant. Die Heizleistung der Heizvorrichtung 13 ist vorzugsweise ungeregelt. Vorzugsweise führt die Heizvorrichtung 13 dem Bereich der Baufeldumgebung nahe den Ecken des Baufelds 6 mehr Wärme zu als anderen Abschnitten der Baufeldumgebung, da der Wärmeverlust an den Ecken des Baufelds 6 in der Regel am größten ist. Dies kann durch eine gezielte Fokussierung der Wärmestrahlung der Heizvorrichtung 13 zu den Ecken des Baufelds 6 erreicht werden, oder durch Anordnen der Heizvorrichtung 13 nahe den Ecken des Baufelds 6.

Ferner ist oberhalb des Rahmens 1 bzw. des Baufelds 6 eine weitere Heizvorrichtung 81, zum Beispiel in Gestalt von geradlinigen Heizstrahlern 81, in einem vorbestimmten Abstand zum Baufeld 6 angeordnet. Solche weiteren Heizstrahler 81 sind aus dem Stand der Technik wie zum Beispiel aus EP-0 764 079 B1 bekannt. Die weiteren Heizstrahler 81 dienen zum Aufheizen der mit dem Beschichter 10 aufgetragenen Pulverschicht auf eine für die Verfestigung mittels des Laserstrahls 8' erforderliche Vortemperatur, wobei die Heizstrahler üblicherweise diskontinuierlich betrieben werden, d.h. die Wärmezufuhr zum Baufeld zeitlich variiert wird. Dabei wird die jeweils neu aufgetragene Pulverschicht, vor der nachfolgenden Verfestigung durch den Laser, auf Prozesstemperatur gebracht.

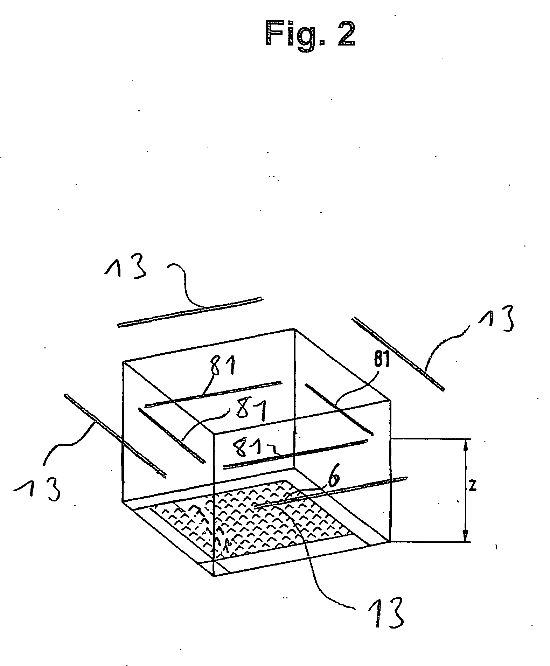

Die Beheizung einer aufgebrachten Pulverschicht erfolgt im dargestellten Ausführungsbeispiel über mindestens zwei, besser jedoch vier geradlinige Heizstrahler 81, die gemäß der Fig. 2 in Anpassung an die Form des Rahmens 1 bzw. dem dadurch definierten Baufeld 6, vorzugsweise in Form eines Rechtecks oder eines Quadrates, parallel zum Baufeld 6 angeordnet sind. Die Länge eines einzelnen Heizstrahlers 81 entspricht jeweils in etwa der von ihm zu überdeckenden Breite des Baufelds 6 bzw. dem Durchmesser des Baufelds 6. Der Abstand z der Heizstrahler 81 zu dem Baufeld 6 beträgt zum Beispiel 220 Millimeter, dieser Abstand kann jedoch über eine Höheneinstellvorrichtung in Anpassung an die Randbedingungen variiert werden, so dass in Abhängigkeit von dem eingestellten Heizstrom eine vorbestimmte Temperatur auf der Oberseite der aufgetragenen Pulverschicht erhalten wird.

Die Heizstrahler 13 können ähnlich wie die weiteren Heizstrahler 81 entsprechend der Fig. 2 angeordnet sein, wobei die Heizstrahler 13 einen äußeren Ring um die innen liegenden Heizstrahler 81 bilden. Die Heizleistung der Heizstrahler 13 ist geringer als die Heizleistung der weiteren Heizstrahler 81. Die Heizstrahler 13 führen weniger Wärme zu als die weiteren Heizstrahler 81, so dass die Heizstrahler 13 deutlich kleiner dimensioniert sind als die weiteren Heizstrahler 81.

Die Heizstrahler 81 sind vorzugsweise so über dem Baufeld 6 positioniert, dass die Symmetrielinien des Baufelds 6 mit den Symmetrielinien der Strahleranordnung übereinstimmen, d.h. bei einem quadratischen Baufeld 6 wird eine quadratische Strahleranordnung gewählt, und bei einem rechteckigen Baufeld 6 wird eine rechteckige Strahleranordnung gewählt. Die Position der Heizstrahler 81 wird mit einer Kalibrierung festgelegt. Die Höhe z der Heizstrahler 81 über dem Baufeld 6 und der Winkel der Heizstrahler 81 zum Baufeld 6 werden dabei manuell eingestellt.

Die Heizstrahler 81 sind mit einer Regeleinrichtung (nicht gezeigt) zum Regeln der Heizleistung der Heizstrahler 81 verbunden. Dies erfolgt mittels eines Sensors (nicht gezeigt) wie zum Beispiel ein berührungslos messender Temperaturfühler in Form eines Pyrometers, der an einer vorgegebenen Stelle über dem Pulverbett bzw. dem Baufeld 6 angebracht ist. Zum Regeln der Heizleistung der Heizstrahler 81 wird zum Beispiel ein Industrieregler in Form eines PID-Reglers bzw. eines PI-Reglers verwendet. Bei der Regelstrecke handelt es sich um ein so genanntes PT1-Glied, wobei ein vorgegebener Temperatursprung P mit einer Zeitverzögerung T1 erreicht wird. Die Regelung der Heizstrahler 81 erfolgt über einen PID-Regler. Dabei werden mit Hilfe des Übertragungsverhaltens die Regelparameter in bekannter Weise festgelegt.

Da die Heizvorrichtung 13 zusätzlich zu den Heizstrahlern 81 verwendet wird, müssen die Heizstrahler 81 weniger Verlustwärme ausgleichen, so dass die Genauigkeit des Regelkreises für die Heizstrahler 81 gegenüber dem Stand der Technik verbessert ist.

Bei dem Betrieb der Vorrichtung wird in einem ersten Schritt der Träger 5 durch die Hubmechanik 4 soweit nach unten verfahren, bis seine obere Seite um die gewünschte Dicke einer ersten Pulverschicht unterhalb der Ebene des Baufelds 6 liegt. Dann wird durch den Beschichter 10 eine erste Schicht des Pulvermaterials 11 auf den Träger 5 aufgebracht und geglättet.

Dieses neu aufgebrachte Pulver ist kaltes Pulver aus dem Vorratsbehälter 10. Die neue Pulverschicht muss sehr schnell erwärmt werden, damit die darunterliegende Schicht nicht zu stark abkühlt. Da die von dem Heizstrahler 81 abgegebene Strahlungswärme die neue Pulverschicht nur an der Oberfläche erwärmt, dauert es eine bestimmte Zeit, bis die gesamte Pulverschicht durch Wärmetransport innerhalb der Schicht auf die gewünschte Temperatur gebracht ist. Zu diesem Zweck wird die Heizleistung der Heizstrahler 81 zum Beispiel mit dem PID-Regler geregelt.

Anschließend steuert die Steuereinheit 40 die Ablenkeinrichtung 9 derart, dass der abgelenkte Laserstrahl 8, 8 ' selektiv an den Stellen der Schicht des Pulvermaterials 11 auftrifft, die verfestigt werden sollen. Dadurch wird an diesen Stellen das Pulvermaterial 11 verfestigt bzw. gesintert, so dass hier das dreidimensionale Objekt 3 entsteht.

In einem nächsten Schritt wird der Träger 5 durch die Hubmechanik 4 um die gewünschte Dicke der nächsten Schicht abgesenkt. Durch den Beschichter 10 wird eine zweite Pulvermaterialschicht aufgetragen, geglättet und mittels des Laserstahls 8, 8' selektiv verfestigt. Diese Schritte werden so oft durchgeführt, bis das gewünschte Objekt 3 hergestellt ist.

In vorteilhafter Weise kompensiert eine kontinuierliche Wärmezufuhr der Heizvorrichtung 13 den kontinuierlichen Wärmeverlust, so dass die Wärmeverluste am Rand des Baufelds 6 minimiert werden können und eine bessere Temperaturverteilung bis zum Randbereich ermöglicht wird. Dadurch vergrößert sich das prozesssichere effektive Baufeld. Dadurch können eine homogene Wärmezufuhr und Temperaturverteilung über das gesamte Baufeld 6 erreicht werden.

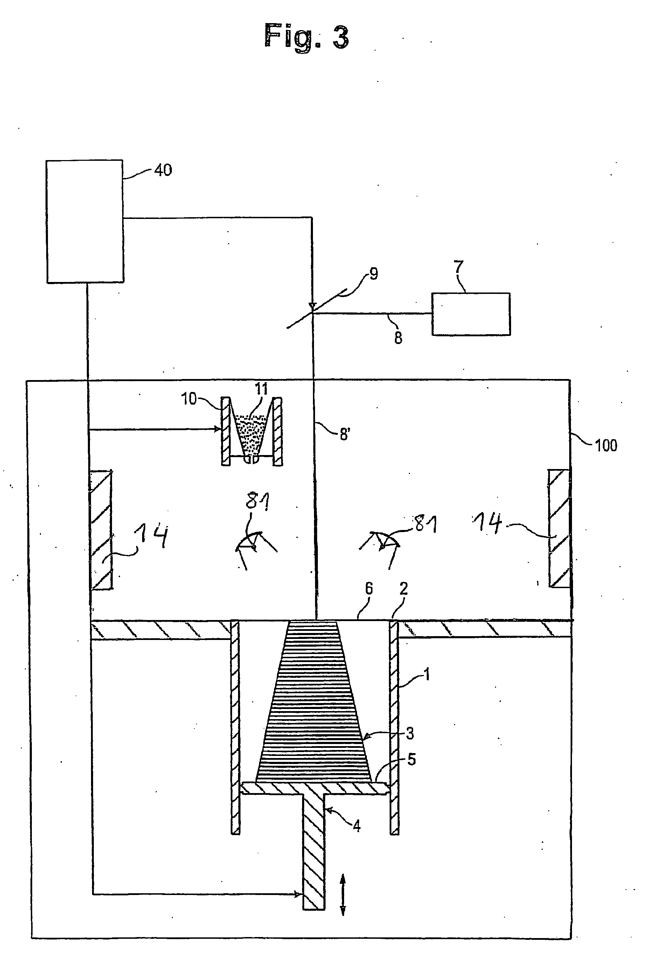

Die Fig. 3 zeigt eine schematische Ansicht einer Vorrichtung zum Herstellen eines dreidimensionalen Objekts gemäß einem zweiten Ausführungsbeispiel. Bei dem zweiten Ausführungsbeispiel weist die Heizvorrichtung mindestens eine Widerstandsheizung 14 auf, die an Wänden des Gehäuses 100 entweder umlaufend oder bereichsweise angeordnet ist.

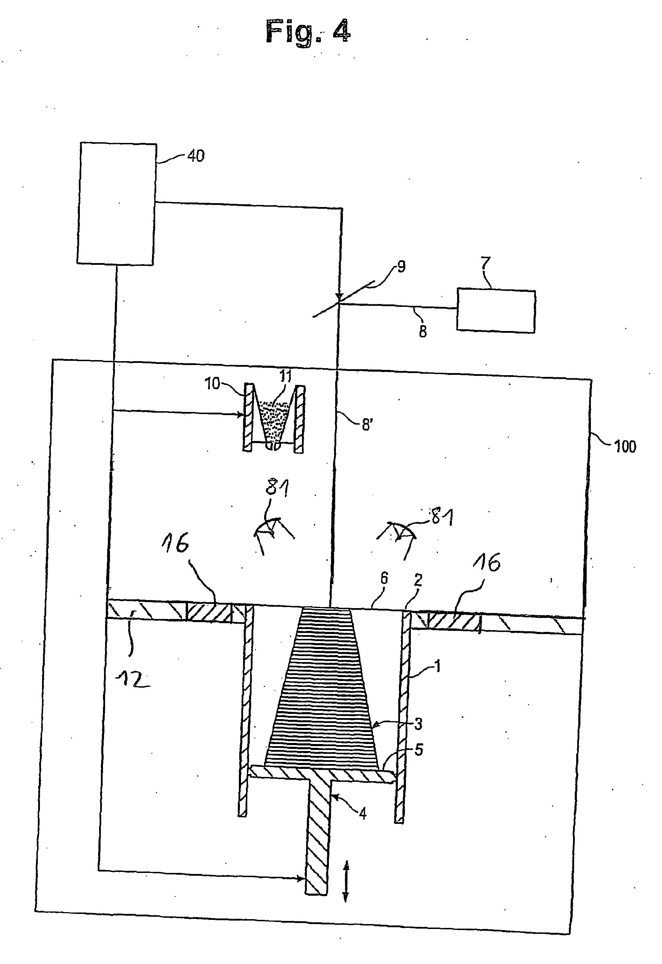

Die Fig. 4 zeigt eine schematische Ansicht einer Vorrichtung zum Herstellen eines dreidimensionalen Objekts gemäß einem dritten Ausführungsbeispiel. Bei dem dritten Ausführungsbeispiel weist die Heizvorrichtung mindestens eine Widerstandsheizung 16 auf, die in oder an der Platte 12 angeordnet ist.

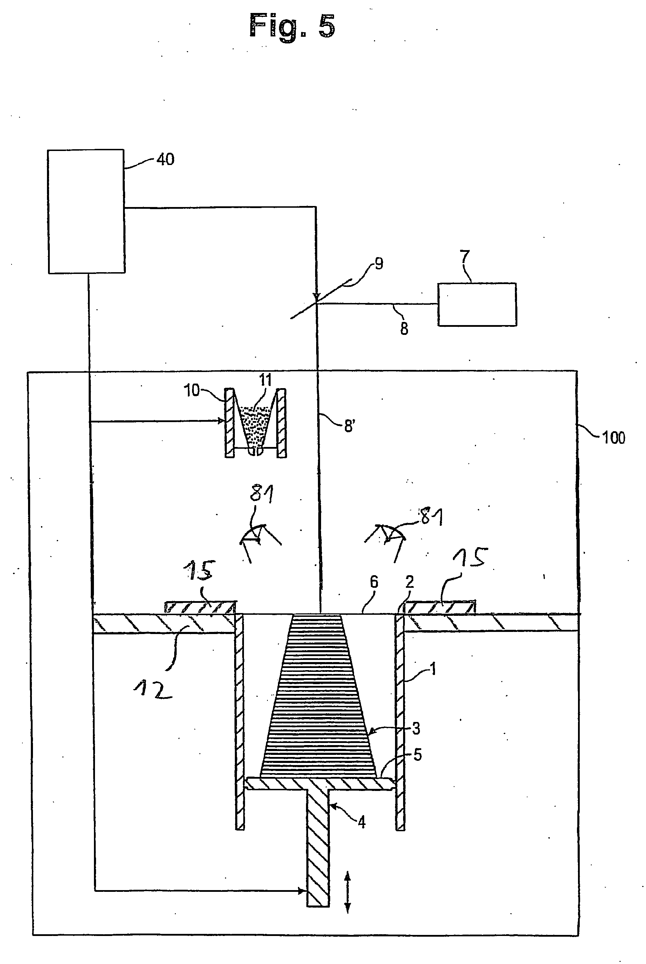

Die Fig. 5 zeigt eine schematische Ansicht einer Vorrichtung zum Herstellen eines dreidimensionalen Objekts gemäß einem vierten Ausführungsbeispiel. Bei dem vierten Ausführungsbeispiel weist die Heizvorrichtung mindestens eine Heizmatte 15 auf, die in oder an der Platte 12 angeordnet ist.

Der weitere Aufbau und der Betrieb der Vorrichtung des zweiten bis vierten Ausführungsbeispiels sind gleich dem ersten Ausführungsbeispiel.

Das erfindungsgemäße Verfahren ist insbesondere bei Lasersinterprozessen anwendbar, bei denen die Temperatur der obersten Pulverschicht im Baufeld durch die weitere Heizvorrichtung auf wenige ° C unterhalb der zur Verfestigung notwendigen Prozesstemperatur des Pulvermaterials vorerwärmt wird, wobei die zusätzliche Strahlung durch den Laserstrahl 8 ' einen weiteren Energieeintrag zum Verfestigen des Pulvermaterials liefert. Dies ist insbesondere bei der Verwendung von pulverförmigen Kunststoffmaterial der Fall.

Der Schutzumfang beschränkt sich nicht auf die dargestellten Ausführungsbeispiele, sondern er umfasst weitere Änderungen und Abwandlungen, sofern diese innerhalb des durch die beigefügten Ansprüche definierten Umfangs fallen.

Zum Beispiel ist das erfindungsgemäße Verfahren nicht nur beim Lasersintern anwendbar, sondern auf alle pulverbasierten, generativen Verfahren, bei denen pro aufzutragender Schicht ein Werkstoff bzw. ein Pulvermaterial verwendet wird, welches durch eine energiehaltige Strahlung verfestigt wird. Die energiehaltige Strahlung muss nicht unbedingt ein Laserstrahl 8 ' sein, sondern kann zum Beispiel auch ein Elektronenstrahl sein oder einer anderen Lichtquelle als einem Laser entstammen.

Die Heizvorrichtung muss nicht notwendigerweise durch Heizstrahler, Widerstandsheizungen und Heizmatten gebildet sein. Die Heizvorrichtung kann zum Beispiel auch durch eine Heizlampe oder durch Infrarotstrahler gebildet sein. Ferner ist es auch möglich, ein Temperierfluid durch Bereiche der Platte 12 oder des Gehäuses 100 strömen zu lassen.

Die Heizvorrichtungen 13, 14, 15, 16 des ersten bis vierten Ausführungsbeispiels können beliebig kombiniert werden.

## Patentansprüche

1. Verfähren zum generativen Herstellen eines dreidimensionalen Objekts (3), mit einer Vorrichtung, die Folgendes aufweist:
einen Rahmen (1), dessen oberer Abschnitt (2) ein Baufeld (6) umschließt;
einen Träger (5), der in dem Rahmen (1) angeordnet ist und durch eine Hubmechanik (4) zumindest unterhalb des Baufelds (6) vertikal bewegbar ist;
eine Vorrichtung zum Erzeugen einer energiehaltigen Strahlung (8, 8'), die selektiv auf beliebige Punkte in dem Baufeld (6) trifft, um in dem Baufeld (6) befindliches Pulvermaterial (11) selektiv zu sintern oder zu schmelzen;
einen Beschichter (10) zum Aufbringen einer Schicht eines Pulvermaterials (11) auf den Träger (5) oder eine zuvor aufgebrachte Schicht des Pulvermaterial (11),
ein Gehäuse (100), in dem zumindest der Rahmen (1) und der Träger (5) angeordnet sind und das einen Bauraum umschließt; und
eine Heizvorrichtung (13; 14; 15; 16), die zumindest der Baufeldumgebung oder dem Bauraum darüber kontinuierlich Wärme zuführen kann; wobei
die Heizvorrichtung (13; 14; 15; 16) zusätzlich zu einer weiteren Heizvorrichtung (81) zur Beheizung des Baufelds (6) vorgesehen ist,
**dadurch gekennzeichnet, dass**
die weitere Heizvorrichtung (81) die mit dem Beschichter (10) aufgebrachte Pulverschicht (11) auf eine für die Sinterung mittels der energiehaitigen Strahlung (8') erforderliche Vortemperatur aufheizt; und
die Heizvorrichtung (13; 14; 15; 16) zumindest der Baufeldumgebung oder dem Bauraum darüber während der Herstellung des dreidimensionalen Objekts (3) einen Grundbetrag einer wärmemenge kontinuierlich zuführt.

2. Verfahren gemäß dem vorherigen Anspruch, wobei die Heizleistung der Heizvorrichtung (13; 14; 15; 16) während der Herstellung des dreidimensionalen Objekts konstant bleibt.

3. Verfahrengemäß einem der vorherigen Ansprüche,
wobei die Heizleistung der Heizvorrichtung (13; 14; 15; 16) geringer ist als jene der weiteren Heizvorrichtung (81).

4. Verfahrengemäß einem der vorherigen Ansprüche,
wobei die Heizvorrichtung (13; 14; 15; 16) mindestens einen Wärmestrahler (13), eine Widerstandsheizung (14, 15), eine Heizmatte (16) oder eine Heizlampe aufweist.

5. Verfahrengemäß einem der vorherigen Ansprüche,
wobei die Heizvorrichtung (14) an Wänden des Gehäuses (100) entweder umlaufend oder bereichsweise angeordnet ist.

6. Verfahrengemäß einem der vorherigen Ansprüche, wobei die Vorrichtung des Weiteren eine Platte (12) aufweist, die in Kontakt mit dem Rahmen (1) und/oder dem Gehäuse (100) der Vorrichtung ist, wobei die Heizvorrichtung (13; 14; 15; 16) der Platte (12) kontinuierlich Wärme zuführt.

7. Verfahrengemäß einem der vorherigen Ansprüche,
wobei die Heizvorrichtung (13; 14; 15; 16) den Ecken des Baufelds (6) mehr Wärme zuführt als anderen Abschnitten des Baufelds (6).

8. Verfahrengemäß einem der vorherigen Ansprüche,
wobei der Rahmen (1) ein Wechselrahmen ist, der modular in die Vorrichtung einsetzbar und herausnehmbar ist.

9. Verfahrengemäß einem der vorherigen Ansprüche,
wobei die Heizvorrichtung (13) als aktive Isolierung des Baufelds (6) dient, um Wärmeverluste von dem Baufeld (6) nach außen in die Baufeldumgebung und in den Bauraum über dieser zu kompensieren.

10. Verfahren nach einem der Ansprüche 1 bis 9 unter Verwendung von Kunststoffpulver als Pulvermaterial (11).

## Claims

1. A process for generatively manufacturing a three-dimensional object (3), having a device comprising:
a frame (1), the upper portion (2) of which surrounds a building field (6);
a support (5) which is arranged in the frame (1) and is vertically movable at least below the building field (6) by lift mechanics (4);
a device which generates an energetic radiation (8, 8') which selectively strikes arbitrary points in the building field (6), so as to selectively sinter or melt powdery material (11) which is present in the building field (6);
a coater (10) for applying a layer of a powdery material (11) onto the support (5) or a previously applied layer of the powdery material (11);
a housing (100), in which at least the frame (1) and the support (5) are arranged and which surrounds a building space; and
a heating device (13; 14; 15; 16) which can continuously supply heat at least to the building field environment or the building space thereabove; wherein
the heating device (13; 14; 15; 16) is provided in addition to a further heating device (81) for heating the building field (6), **characterized in that**
the further heating device (81) heats up the powdery layer (11), which has been applied by the coater (10), to a pre-temperature required for sintering by means of the energetic radiation (8'); and
the heating device (13; 14; 15; 16) continuously supplies a basic amount of heat at least to the building field environment or the building space thereabove during the manufacture of the three-dimensional object (3).

2. The process according to the preceding claim, wherein the heat power of the heating device (13; 14; 15; 16) is kept constant during the manufacturing of the three-dimensional object.

3. The process according to either of the preceding claims,
wherein the heat power of the heating device (13; 14; 15; 16) is less than that of the further heating device (81).

4. The process according to any one of the preceding claims,
wherein the heating device (13; 14; 15; 16) comprises at least one heat radiator (13), a resistance heater (14, 15), a heating mat (16) or a heat lamp.

5. The process according to any one of the preceding claims, wherein the heating device (14) is arranged at walls of the housing (100) either in a circumferential manner or in certain areas.

6. The process according to any one of the preceding claims, wherein the device further comprises a plate (12) which is in contact with the frame (1) and/or the housing (100) of the device, wherein the heating device (13; 14; 15; 16) continuously supplies heat to the plate (12).

7. The process according to any one of the preceding claims, wherein the heating device (13; 14; 15; 16) supplies more heat to the corners of the building field (6) than to other portions of the building field (6).

8. The process according to any one of the preceding claims, wherein the frame (1) is a replacement frame which is modularly insertable in and removable from the device.

9. The process according to any one of the preceding claims, wherein the heating device (13) serves as an active insulation for the building field (6), in order to compensate for heat losses from the building field (6) externally into the building field environment and into the building space thereabove.

10. The process according to any one of claims 1 to 9, using synthetic plastic powder as powdery material (11).

## Revendications

1. Procédé de fabrication générative d'un objet tridimensionnel (3), avec un dispositif qui présente les éléments suivants:
un cadre (1), dont la partie supérieure (2) entoure un champ de construction (6);
un support (5), qui est disposé dans le cadre (1) et qui est déplaçable verticalement au moyen d'un mécanisme de levage (4) au moins en dessous du champ de construction (6);
un dispositif pour produire un rayonnement énergétique (8, 8'), qui frappe de façon sélective en des points arbitraires dans le champ de construction (6), afin de fritter ou de fondre de façon sélective un matériau pulvérulent (11) se trouvant dans le champ de construction (6);
un système de revêtement (10), pour déposer une couche d'un matériau pulvérulent (11) sur le support (5) ou une couche préalablement déposée du matériau pulvérulent (11);
une enceinte (100), dans laquelle sont disposés au moins le cadre (1) et le support (5) et qui entoure un espace de construction;
un dispositif de chauffage (13; 14; 15; 16), qui peut fournir de la chaleur en continu au moins à l'atmosphère du champ de construction ou à l'espace de construction au-dessus de celle-ci et
un dispositif de chauffage (13; 14; 15; 16), qui est prévu en plus d'un autre dispositif de chauffage (81) pour le chauffage du champ de construction (6), **caractérisé en ce que**
l'autre dispositif de chauffage (81) chauffe la couche de poudre (11) déposée au moyen du système de revêtement (10) à une température préalable nécessaire pour le frittage au moyen du rayonnement énergétique (8'); et
le dispositif de chauffage (13; 14; 15; 16) fournit en plus en continu une portion de base d'une quantité de chaleur à l'atmosphère du champ de construction ou à l'espace de construction pendant la fabrication de l'objet tridimensionnel (3).

2. Procédé selon la revendication précédente, dans lequel la puissance de chauffage du dispositif de chauffage (13; 14; 15; 16) reste constante pendant la fabrication de l'objet tridimensionnel.

3. Procédé selon l'une quelconque des revendications précédentes, dans lequel la puissance de chauffage du dispositif de chauffage (13; 14; 15; 16) est inférieure à celle de l'autre dispositif de chauffage (81).

4. Procédé selon l'une quelconque des revendications précédentes, dans lequel le dispositif de chauffage (13; 14; 15; 16) présente au moins un radiateur de chaleur (13), un chauffage par résistance (14, 15), un tapis chauffant (16) ou une lampe de chauffage.

5. Procédé selon l'une quelconque des revendications précédentes, dans lequel le dispositif de chauffage (14) est disposé sur des parois de l'enceinte (100) soit en continu soit par zones.

6. Procédé selon l'une quelconque des revendications précédentes, dans lequel le dispositif présente en outre une plaque (12), qui est en contact avec le cadre (1) et/ou avec l'enceinte (100) du dispositif, dans lequel le dispositif de chauffage (13; 14; 15; 16) fournit de la chaleur en continu à la plaque (12).

7. Procédé selon l'une quelconque des revendications précédentes, dans lequel le dispositif de chauffage (13; 14; 15; 16) fournit plus de chaleur dans les coins du champ de construction (6) que dans d'autres parties du champ de construction (6).

8. Procédé selon l'une quelconque des revendications précédentes, dans lequel le cadre (1) est un cadre interchangeable, qui peut être introduit et retiré de façon modulaire dans le dispositif.

9. Procédé selon l'une quelconque des revendications précédentes, dans lequel le dispositif de chauffage (13) sert d'isolant actif du champ de construction (6), afin de compenser les pertes de chaleur du champ de construction (6) vers l'extérieur dans l'atmosphère du champ de construction et dans l'espace de construction au-dessus de celle-ci.

10. Procédé selon l'une quelconque des revendications 1 à 9 avec utilisation de poudre de matière plastique comme matériau pulvérulent (11).
